(19) Europäisches Patentamt
European Patent Office
Office européen des brevets

(11) EP 0 789 821 B1

## (12) EUROPEAN PATENT SPECIFICATION

(45) Date of publication and mention
of the grant of the patent:
**10.01.2001 Bulletin 2001/02**

(21) Application number: **94931514.7**

(22) Date of filing: **24.10.1994**

(51) Int Cl.⁷: **F16K 3/26**

(86) International application number:
**PCT/DK94/00391**

(87) International publication number:
**WO 95/12082 (04.05.1995 Gazette 1995/19)**

(54) **STOP OR SLIDE VALVE, ESPECIALLY FOR THE CONTROL OF LIQUID FLOW IN A CENTRAL HEATING OR AIR CONDITIONING PLANT**

ABSPERR- ODER SCHIEBEVENTIL INSBESONDERE FÜR DIE REGELUNG DER FLÜSSIGKEITSSTRÖMUNG IN EINER ZENTRALHEIZUNGS- ODER KLIMAANLAGE

ROBINET D'ARRET OU A TIROIR SPECIALEMENT CONCU POUR LA REGULATION DU DEBIT DE LIQUIDE DANS UN SYSTEME DE CHAUFFAGE CENTRAL OU DE CLIMATISATION

(84) Designated Contracting States:
**AT BE CH DE DK ES FR GB GR IE IT LI NL PT SE**

(30) Priority: **28.10.1993 DK 121893**

(43) Date of publication of application:
**20.08.1997 Bulletin 1997/34**

(73) Proprietor: **FlowCon International A/S
4200 Slagelse (DK)**

(72) Inventor: **MOESBY, Peter
DK-4200 Slagelse (DK)**

(74) Representative: **Lund, Preben et al
Larsen & Birkeholm A/S,
Banegardspladsen 1,
P.O. Box 362
1570 Copenhagen V (DK)**

(56) References cited:
**DE-B- 2 555 752**          **US-A- 4 527 595**

• **PATENT ABSTRACTS OF JAPAN, Vol. 9, No. 94, M-374; & JP,A,59 219 579 (OOKAWARA SEISAKUJIYO K.K.), 10 December 1984.**

## Description

The invention relates to a throttle valve, especially for the control of liquid flow in a central heating or air-conditioning system consisting of two concentric elements, for example two circular plates disposed in close contact with each other, or two cylindrical sleeves, one of which is inside the other, said elements having a number n of holes and being adapted to turn individually to create a restriction area with a permanent open position, which is optional among several open positions having different areas, and being located equidistantly along the circumference of the elements, the number n of holes in one element being equal to the number of covering areas in the second element.

The systems may, for example, be circulation systems, wherein the liquid medium after heating can emit heat, or after cooling can absorb heat from the surroundings.

These systems are normally referred to as heating systems respectively cooling systems (air-conditioning), in which the different rooms are provided with valves to regulate the heating or the cooling of the room. If the valves in one or more rooms are used, the pressure in the entire system will change. It is, therefore, desirable to have a self-regulating valve inserted into the system.

DE Patent Specification no. 32 23 206 describes a valve of the above mentioned type, which is provided with at least two radial grooves, each having its own feed channel, and a valve arrangement for providing connection as desired between a feed channel and the opening of the valve. In this construction it is possible by means of the valve arrangement to adjust different amounts of flow in a system having a liquid medium when the radial grooves have varying cross sections.

These amounts of liquid are to a great extent independent from the differences in pressure within the system, which is the reason why this known valve is not self-regulating when changes of pressure occur within the system.

It is therefore an object of the present invention to provide such design of the known valve that the valve can be used as an automatic regulator for regulation of the flow of liquid in a system having a liquid medium to the effect that the flow is limited to a predetermined amount in the entire system, in one section thereof or in more sections, divided into zones.

This object is achieved by means of a valve of the above described type, which valve according to the invention is advantageous in that both elements are divided into segments of equal size, that each segment has a maximum of one hole, that the area of the holes in one element is larger than the area of the largest hole in the second element, and that the equidistant division is determined by the number n of holes according to the formula:

$$2^n = D \times 2,$$

wherein D is the number of equally large segments along the circumference, and where there are two turning positions for each segment D.

The dependent claims refer to advantageous embodiments of the valve according to the invention.

The throttle valve according to the invention will be explained in detail in the description below with reference to the accompanying drawing, wherein:

Fig. 1    is a horizontal plan drawing of a first and a second plate, which are adapted to be turned with respect to one another about a shared axis,

Fig. 2    is a table showing the turning positions of the two plates illustrated in Fig. 1,

Fig. 3    illustrates an axial section through a valve according to the invention in a first embodiment of an insert having a first restriction area for selection of a permanent open position, and a second restriction area having a piston, which is movable in dependence of the difference in pressure in a system having a liquid medium,

Fig. 4    illustrates the section IV-IV indicated in Fig. 3,

Fig. 5    illustrates the section V-V indicated in Fig. 3,

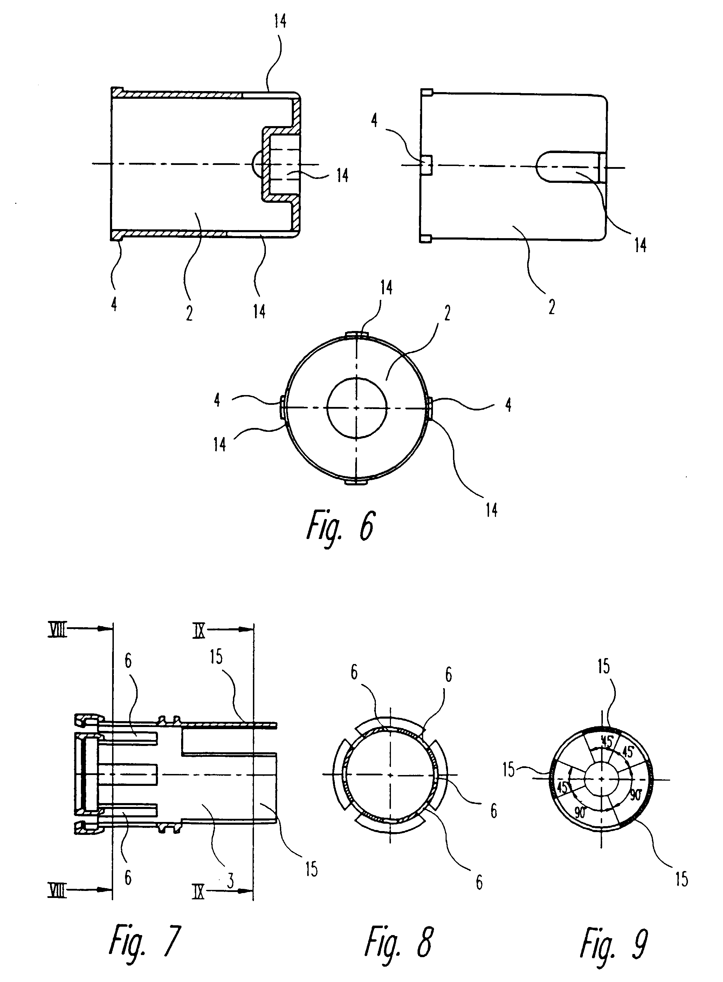

Fig. 6    illustrates an inside sleeve or piston of the valve in Fig. 3, as seen in axial section, in a side view and in a plan view from the closed end,

Fig. 7    illustrates an outside sleeve in the valve of Fig. 3, seen in axial section,

Fig. 8    illustrates the section VIII-VIII indicated in Fig. 7,

Fig. 9    illustrates the section IX-IX indicated in Fig. 7,

Fig. 10   illustrates an axial section through a valve according to the invention in a second embodiment of an insert having a first restriction area, in which a permanent open position can be selected, and a second restriction area having a membrane, which is movable in dependence of the difference in pressure in a system having a liquid medium,

Fig. 11   is a drawing of the insert illustrated in Fig. 10 seen from one end, and

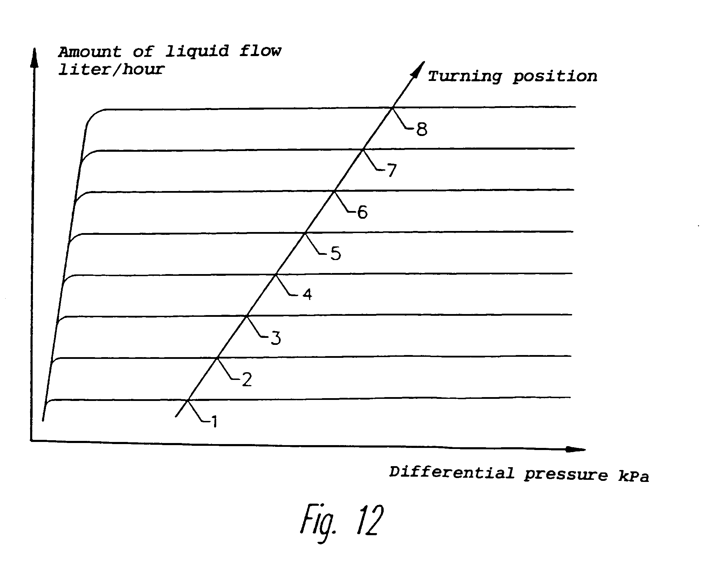

Fig. 12 is a diagram illustrating the amount of liquid flow at different selective permanent open positions having varying cross sections.

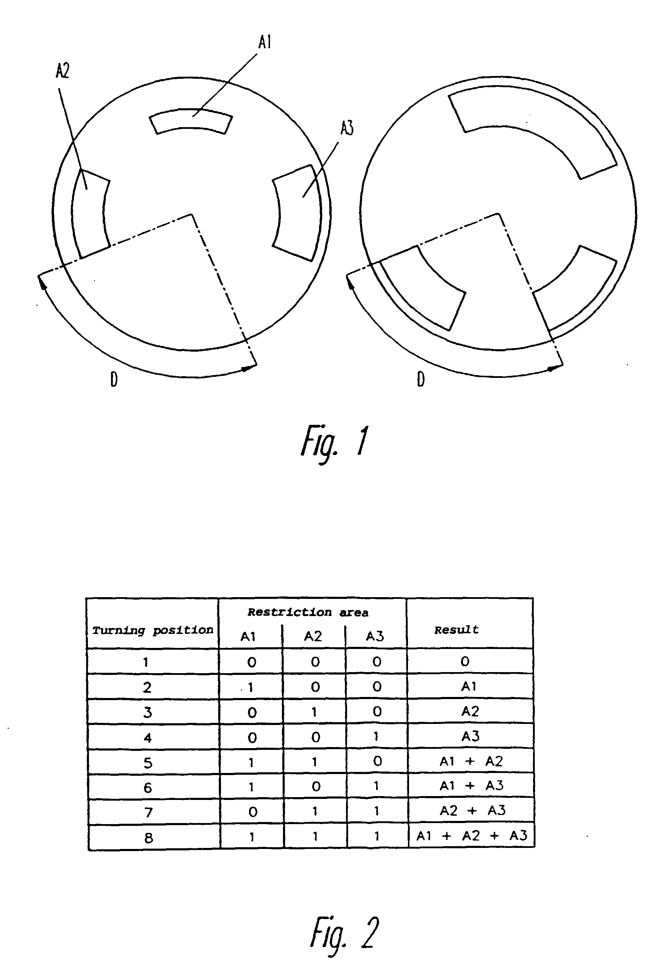

A throttle valve according to the invention will be explained first with reference to Fig. 1, which illustrates two concentric plates, which are adapted to turn about a shared axis after having been positioned in level against one another. The plates are divided into four equally large segments D along their circumference, each being 90°. When turning the plates about the shared axis, two turning positions are anticipated for each segment D.

In the first plate three of the segments D are provided with an opening $A_1$, $A_2$, $A_3$, said openings extending over an angle of 45°. The three openings have different areas, the areas being defined by circular arcs having the same inside radius but with different outside radii. It will be seen that there is at least part of a segment D between two openings.

In the second plate, three of the segments D are provided with recesses, two of which extend at an angle of 45°, whereas the third recess extends over 90°. The recesses are inwardly defined by an inside radius, which is smaller than or equal to the above mentioned inside radius of the first plate. Outwardly, the recesses are defined by outside radii, which are equal to or larger than the largest outside radius of the openings in the first plate. Instead of recesses, which are defined outwardly, the recesses may be open along the edge of the plate. The remaining part of the two segments D having a recess of 45° constitutes a tongue, which can cover or uncover an opening $A_1$, $A_2$, $A_3$, in the first plate.

The plates are adapted to be turned about a shared axis in skips of 45°, and at three permanent openings and three tongues, which are arranged as illustrated in Fig. 1, a total of eight turning positions can be selected by turning the first plate eight times each 45° in relation to the second plate, and it will be understood from Fig. 1 that in a first turning position all of the openings $A_1$, $A_2$, $A_3$ of the first plate may be covered by a tongue of the second plate, and that by appropriate turning positions of the plates, combinations of covered and/or uncovered openings can be obtained, whereby at each turning position with openings total restriction areas being mutually different, can be obtained.

This is illustrated in Fig. 2, wherein all three openings $A_1$, $A_2$, $A_3$ at turn position 1 are covered by a tongue, which as indicated by a zero in the columns for the three openings and by a zero in the result column. In turning position 2 the opening $A_1$ is uncovered as indicated by the figure 1 in the $A_1$-column and the indication A1 in the result column. At turn positions 3 and 4 it is similarly obtained that the openings $A_2$ respectively $A_3$ are open, as indicated by the figure 1 in the $A_2$- or the $A_3$-column and A2, respectively A3 in the result column. At turning position 5 the opening $A_1$ as well as the opening $A_2$ are open, and finally all three openings $A_1$, $A_2$, $A_3$ are open at turning position 8.

It should be noted that the turning positions 1 to 8 illustrated in Fig. 2 are not obtained in the order indicated when the first plate is turned in the afore mentioned skips of 45° and in a certain direction of turning. The turning positions are so arranged in the drawing that the result column will appear orderly.

In the arrangement of the openings $A_1$, $A_2$, $A_3$ and the recesses/tongues there will always be at least part of the segment D between these two types of holes.

Fig. 1 illustrates plates, wherein the number of openings is three, wherein the number of segments is four, and wherein there are at least eight turning positions, each differing 45° from one another. It is also possible to design plates having four openings, the number of segments then being eight, and the number of turning positions then totalling sixteen and differing 22,5° from one another.

In each case, the number of openings is determined according to the formula:

$$2^n = Dx2,$$

where D is the number of equally large segments along the circumference, and where there are two turning positions for each segment.

The size of the openings may advantageously be so adapted that the smallest opening determines the size of the remaining openings according to a binary series having the formula:

$$A_p = 2A_{(p-1)}.$$

where p is the number of the hole in the series, and A is the area of the smallest opening.

If the plates are used as a valve for the control of a liquid flow, wherein the smallest opening is adapted to a area which may result in a flow of 10 liters/hour, such an adaptation of the mutual sizes of the openings may result in that the flow at the remaining turning positions may be reduced in skips of 10 liter/hour, starting at 0 liter/hour and up to 70 liter/hour.

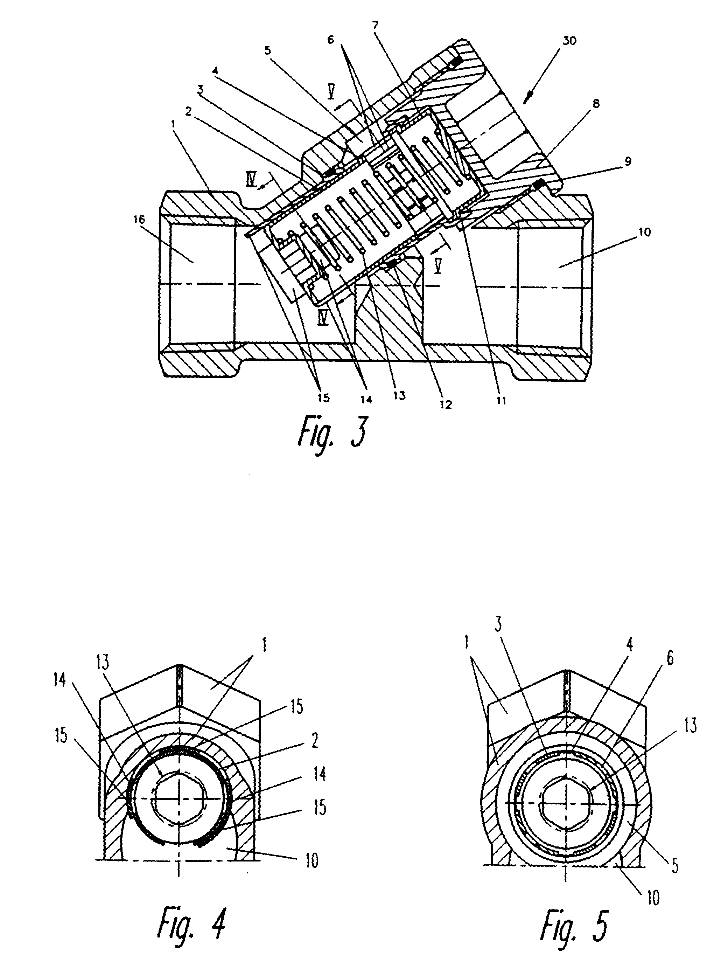

Fig. 3 illustrates a valve, which is adapted to be built into the the piping of a heating or cooling system as a unit. The valve housing 1 has an inlet with a cylindrical cavity 16, which is connected to an outlet 10 via a channel, and a first embodiment of an insert 30 is placed in the channel.

The liquid medium is led to the valve housing 1 and into the cylindrical cavity 16, where the medium gets into contact with the lower part of the collected insert 30, comprising a cylindrical inside sleeve or piston 2 having circular section and an outside tubular sleeve 3.

The piston 2 is cup-shaped with its bottom facing the cavity 16, and the piston 2 rests firmly with its circumference against the inside of the sleeve 3 with its circumference and can be moved axially within the sleeve. At the end of the sleeve 3 which is offset from the bottom of the piston 2 the sleeve is connected to a cup-shaped cap 7, the bottom of which is offset from the bottom of the piston 2. The piston 2, the sleeve 3 and the cap 7 enclose coaxially a spring 13 which, resting on the bottoms, will push them in opposite directions. The central part of the bottom of the piston 2 is designed with an impression, whereas a corresponding thickening is located centrally on the inside of the cap 7, said impression and said thickening serving the purpose of controlling the spring 13 inside the insert.

The piston 2 is at the edge of the bottom provided with three permanent openings 14, each extending 45° along the circumference and offset 90° in relation to one another. The permanent openings 14 have different opening areas $A_1$, $A_2$, $A_3$, the axial lengths of the openings 14 being different.

Furthermore, the edge of the cup-shaped piston 2 is provided with four radially protruding projections, which are spaced at equal distance along the edge.

The edge of the sleeve 3 is on a level with the bottom of the piston 2 designed with axial recesses to the effect that three tongues are created, two of which extend 45° along the circumference, while the third tongue 15 extends at 90°.

At the opposite end of the sleeve 3 and at an equal angular distance of 45° are provided eight axial grooves 6, which can accomodate the four projections 4 of the piston 2 in such a manner that the piston 2 can be pushed axially into the sleeve 3, turned along its axis in a particular turning position out of eight turning positions possible, however, is prevented from turning in relation thereto when the projections 4 are engaged with four of the axial grooves 6. In order to turn the piston 2 in relation to the sleeve 3 into a new turning position, it is therefore necessary to move the piston 2 axially out of the sleeve 3, to the effect that the projections 4 are disengaged from the axial grooves 6. The piston 2 can then be turned into a new turning position, and the four projections 4 can again be pushed into four other grooves 6 in the sleeve 3.

After the piston 2 has been positioned inside the sleeve 3 in a predetermined turning position, the cup-shaped cap 7 is mounted on the sleeve by means of a connection, which is not illustrated in detail, to the effect that the entire insert 30 comprises the piston 2, the sleeve 3, the cap 7, and the spring 13. The sleeve 3 has on its outer side a tube packing 12, which serves to seal against the inside of the valve housing 1. The mentioned connection between the sleeve 3 and the cap 7 may, for example, consist of an internal circumferential recess along the edge of the sleeve 3, which recess can engage in a circumferential exterior rim of the cap 7, and the two parts are connected by pushing the two parts together under elastic yielding on the part of the edge of the sleeve 3 and/or the cap 7.

The grooves 6 together with the edge of the piston 2 will create a number of variable openings as a result of the axial movement of the piston 2 in the sleeve 3, and these openings are connected to a ring-shaped volume 5 enclosing the insert 30 and being connected to the outlet 10.

In the arrangement described comprising the tongues 15 of the sleeve 3 and the permanent openings 14 at the bottom of the piston 2 described, a total of eight permanent turning positions can be created, in which the tongues 15 can cover the openings 14 individually or in combinations. These combinations may thus include that all permanent openings 14 are covered by tongues 15, that one single opening out of the three permanent openings is covered by a tongue, that two selected openings of the permanent openings are covered by tongues, or that none of the three permanent openings 14 are covered by tongues 15.

This arrangement thus corresponds to the arrangement in the rotary valve described and illustrated in Fig. 1.

If only a single of the permanent openings 14 is not covered by the tongues 15, there will be a difference in pressure between the cavity 16 and the interior cavity of the insert. This difference in pressure will effect the bottom of the piston 2 with an axial thrust which is proportional to the cylindrical area and to the size of the difference in pressure, to the effect that the piston 2 is pushed into the sleeve 3 and will compress the spring 13. The spring 13 will react with a force of equal size and thus create a balance of power on the piston 2. In this position of the piston 2 there will now be a difference in presure betweeen the cavity 16 and the inside cavity of the collected insert 30.

As a result of the axial movement of the piston 2 the top edge will screen a larger or smaller portion of the grooves 6 in the fixed sleeve 3. The size or the area of the grooves 6 thus depend on the axial position of the piston 2 prevailing as a result of the balance of power.

When the medium passes through the grooves 6 there will also be a difference in pressure between the inside cavity of the collected insert 30 and the ring-shaped volume 5 and the outlet 10. This difference in pressure will depend on the size or the area of the grooves 6 and the flow of medium through the collected piping within the system.

The two differences of pressure, which are created by the passage of the medium through one permanent opening or the permanent openings 14 and the grooves 6, will together provide the total difference in pressure over the entire valve. The total difference in pressure will distribute itself so that over one permanent opening, respectively the permanent openings 14 there will be an approximately constant difference in pressure, which is independent from the total difference in pressure. The degree of the approximately constant difference in pressure depends on construction related conditions only between the forces and modifications of forces on the spring 13 and on the area of the circular bottom of the piston 2.

With the above mentioned approximately constant difference in pressure created over one permanent opening respectively the permanent openings 14, the flow through the system will remain constant, independent from the total difference in pressure.

The axial length of the grooves 6 is adapted to the axial movement of the piston 2 possible to create, as a result of the difference in pressure over one opening or the permanent openings 14 to the effect that the projections at the edge of the piston 2 cannot be disengaged from the grooves 6, whereby an unintended turn of the piston 2 in relation to the sleeve 3 is prevented, while the valve is in operation.

If it is desired to change the permanent position of the opening or the openings 14, without dismantling the valve, it is possible to secure a pin on the inside of the bottom of the piston 2 so that after the pin has been put out through a stuffing box of the cup-shaped cap 7, the piston can be pulled so far towards the cap 7 that the projections 4 of the piston 2 can be disengaged from the grooves 6, and the piston 2 can then be turned into a new turning position.

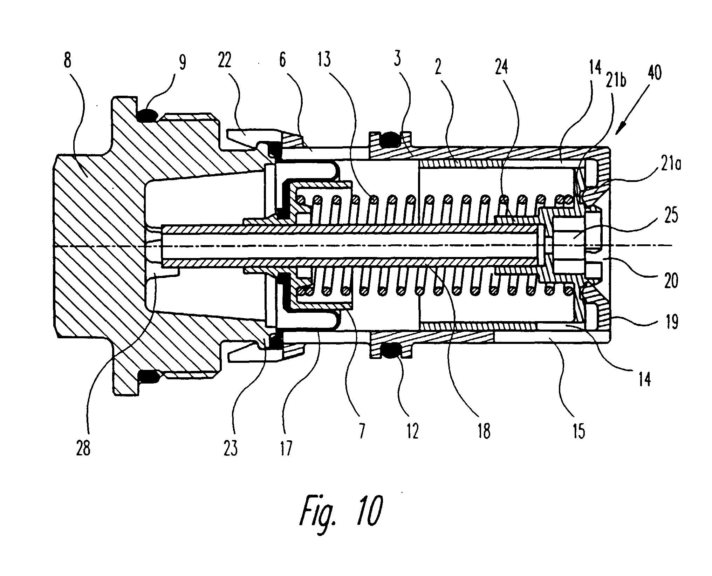

Fig. 10 illustrates an insert 40 according to a second embodiment of the invention. This insert 40 also has a first restriction area, in which a permanent open position can be preadjusted, and the second restriction area is a membrane, which is movable in dependence on the difference in pressure in a system having a liquid medium.

This insert 40 likewise comprises a cup-shaped piston 2, which is inserted into a tube shaped sleeve 3 and has its circumference disposed in close contact with the inside hereof. One end of the sleeve 3 is partly closed by means of a wall 19, which has a circular opening 20. The edge of the wall 19 is at the opening 20 provided with at least two projections 21a extending a small distance into the sleeve 3. The opposite open end of the sleeve 3 is provided with a number of hooks 22, which are adapted for engagement by elastic yielding with a circumferential rim 23 of a screw plug 8, whereby the collected insert 40 can be mounted in the valve housing 1.

The bottom of the piston 2 is designed with eight recesses 21b, which accomodate the above mentioned projections 21a of the sleeve 3, and it will be understood that the piston 2 can thus be fixed in a total of eigth turning positions in the sleeve 3 by the engagement between the projections 21a and the recesses 21b, the engagement being secured by means of a spring 13.

The bottom of the piston 2 has on its inside a central, short tube-shaped extension 24, which serves the purpose of controlling the spring 13 inside the piston 2. Towards the outside of the piston 2 the tube-shaped extension 24 is designed with surfaces of engagement 25 for a tool, whereby the piston 2 can be turned inside the sleeve 3, the tool being for example a hexagon Allen key. The edge of the tube-shaped extension 24 projecting through the sleeve 3 has a recess 26, which in its position opposite a series of numbers 27 along an arc arranged on the sleeve 3 indicates a turning position for the piston 2 in relation to the sleeve 3 og thus a permanent preadjusted position of one permanent opening respectively the permanent openings 14.

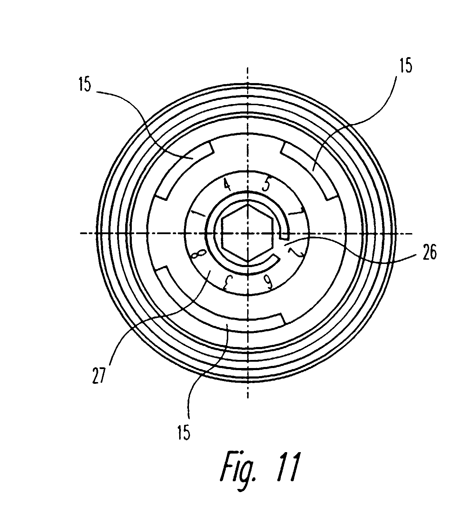

In Fig. 11 the recess 26 is located opposite the number 2 of the series of numbers 27 thus indicating that the insert 40 is preadjusted to the turning position 2. It should be noted that the series of numbers 27 does not extend in numerical order in a given direction of turning.

The piston 2 is at the edge of the bottom provided with three openings 14 each extending over $45°$ along the circumference and being offset $90°$ in relation to each other. The openings 14 have different areas of opening $A_1$, $A_2$, $A_3$, the axial lengths of the openings 14 being different. The openings 14 may also be created by bores having different sections.

The sleeve 3 is opposite the openings 14 at the bottom of the piston 2 designed with two axial recesses or openings 15, each extending $45°$ along the circumference, and extending over $90°$ together with the wall succeeding in the circumferential direction, while the third recess or opening 15 extends over $90°$, and the remaining wall likewise extending over $90°$ in the circumferential direction.

In the arrangement described for the openings 14, 15 at the bottom of the piston 2 respectively the sleeve 3, a total of eight permanent turning positions can be provided, in which the openings 15 can cover the openings 14 individually or in combinations. These combinations can thus comprise the options that all of the openings 14 are covered by the openings 15, that one of the three openings 14 is covered by an intermediate wall of the sleeve 3, that two selected openings 14 are covered by intermediate walls of the sleeve 3 or that none of the three openings are covered by intermediate walls.

This arrangement thus corresponds to the arrangement in the rotary valve described and illustrated in Fig. 3.

At the open end of the sleeve 3 which carries the hooks 22, a number of longitudinal grooves 6 are provided, which are connected to a ring-shaped space 5 in the valve housing 1, when the insert 40 is mounted therein.

The extension 24 inside the piston 2 accomodates a central pipe 18 extending approximately to the inside of the screw plug 8, where the pipe 18 is controlled by a number of projections 28. It will be seen from Fig. 10 that there is passage through the bottom of the piston 2, the pipe 18 and out between the projections 28 to the space around the projections. Opposite the projections the pipe 18 carries a cup-shaped cap 7, which is slidingly movable along the pipe 18 in tight relationship. The opening of the cap 7 faces the piston 2.

The cap 7 carries a membrane or a bellows 17 of elastic material. The membrane 17 can be described as a short tube, one end of which is rolled over the other end at radial distance, whereupon the radially outermost part is kept tightly fixed between the edge of the sleeve 3 and the screw plug 8, when the hooks 22 engage in the circumferential rim 23 of the screw plug 8. The radially innermost part of the membrane 17 is secured tightly to the cap 7. The membrane 17 will roll over or roll about itself to a smaller or larger extent when moving the cap 7 along the pipe 18, whereby the radially outermost part can increase or decrease and roll over the grooves 6 of the sleeve 3.

The piston 2, the sleeve 3 and the cap 7 enclose the spring 13 coaxially, the spring being controlled by the pipe 18, and by its abutment against the bottom of the sleeve 3 and the bottom of the cap 7 will push them in opposite directions. The spring 13 is also controlled by the extension 24 of the bottom of the piston 2, and a corresponding thickness is provided centrally on the inside of the bottom of the cap 7.

After the piston 2 has been positioned inside the sleeve 3 in a predetermined turning position, the cup-shaped cap 7 is mounted on the pipe 18 under compression of the spring 13, and the radially outermost part of the membrane 17 will be clamped to the edge of the sleeve 3 as a result of the engagement of the hooks 22 on the rim 23 so that the collected insert 40 comprises the piston 2, the sleeve 3, the cap 7, the membrane 17 and the spring 13. The sleeve 3 has on its outer side a tube packing 12 for sealing against the inner side of the valve housing 1 after the insert 40 has been mounted therein.

If only one single of the openings 14 between the piston 2 is not covered by the intermediate walls between the openings 15 of the sleeve 3, there will be a difference in pressure between the cavity 16 and the inside cavity of the insert 40. This difference in pressure can effect the membrane 17 with an axial thrust, which is proportional to the cylindrical area and the size of the difference in pressure, whereby the membrane 17 can be rolled into the sleeve 3 and compress the spring 13 together. The medium can also from the cavity 16 flow through the central pipe 18 and effect the membrane 17. The spring 13 will react with a force of equal size and thus create a balance of power on the membrane 17. In this position of the membrane 17 there will now be a difference in pressure between the cavity 16 and the inside cavity of the collected insert 40.

As a result of the axial rolling, the membrane 17 will screen a larger or smaller part of the grooves 6 of the fixed sleeve 3. The sizes of the grooves 6 thus depend on the axial position of the membrane 17 prevailing as a result of the balance of power.

When the medium passes through the grooves 6 there will likewise be a difference in pressure between the inside cavity of the collected insert 40 and the ring-shaped volume 5 and the outlet 10. This difference in pressure is dependent on the sizes of the grooves 6 and the flow through the collected piping of the system.

The two differences in pressure, which are created by the passage of the medium through one permantly adjusted opening or the permanently adjusted openings 14 and the variable openings in the form of the grooves 6, will together create the total difference in pressure over the entire valve. The total difference in pressure will distribute itself so that over one permanent opening respectively the permanent openings 14 there will be an approximately constant difference in pressure, which is independent of the total difference in pressure. The degree of the approximate difference in pressure is dependent only on forces and modifications of forces on the spring 13 as well as on the size of the circular area of the membrane 17.

As a result of the above described approximately constant difference in pressure over one permanent opening respectively the permanent openings 14, the flow through the system will remain constant, independent of the total difference in pressure.

The axial lengths of the grooves 6 are adapted in proportion to the axial rolling possible of the membrane 17, which can be produced by the difference of pressure over one permanent opening or the permanent openings 14.

## Claims

1. A throttle valve, especially for the control of liquid flow in a central heating or airconditioning system consisting of two concentric elements (2, 3), for example two circular plates disposed in close contact with each other, or two cylindrical sleeves, one of which is inside the other, said elements having a number n of holes and being adapted to turn individually to create a restriction area with a permanent open position, which is optional among several open positions having different areas ($A_1$, $A_2$,.., $A_n$), and being located equidistantly along the circumference of the elements, the number n of holes in one element being equal to the number of covering areas in the second element, **<u>characterized in</u>**

　　that both elements are divided into segments of equal size,
　　that each segment has a maximum of one hole,
　　that the area of the holes in one element is larger than the area ($A_n$) of the largest hole in the second element, and
　　that the equidistant division is determined by the number n of holes according to the formula:

$$2^n = Dx2,$$

wherein D is the number of equally large segments along the circumference, and where there are two turning positions for each segment D.

2. Valve according to claim 1, **characterized in** that there is at all times at least part of one segment between two holes.

3. Valve according to claim 1 or 2, **characterized in** that the smallest hole determines the size of the remaining holes according to a binary series having the formula:

$$A_p = 2A_{(p-1)}.$$

where p is the number of the hole in the series, and A is the area of the smallest hole.

4. Valve according to claims 1 - 3, wherein the elements consist of a piston (2) and a sleeve (3), which encloses the piston (2) concentrically and together herewith constitutes a first restriction area (14, 15) having a selective permanent opening area ($A_1$, $A_2$, ,,, or $A_n$), **characterized in** that the first restriction area (14, 15) is positioned in series with a second restriction area comprising one or more openings (6), as e.g. axial grooves, which are variable by screening of the piston (2) being movable in the axial direction of the sleeve (3), the degree of screening being determined by the total difference in pressure over the valve in proportion to the difference in pressure over the first restriction area (14, 15).

5. Valve according to claim 4, **characterized in** that the first restriction area comprises three openings (14) provided in the bottom of the cup-shaped piston (2), each having their own area ($A_1$, $A_2$, $A_3$), which can be covered individually or in combination as desired by three tongues (15) on the sleeve (3), and in that the second restriction area is constituted by the edge of the piston (2) in conjunction with the axial grooves (6) in the sleeve (3).

6. Valve according to claims 1 - 3, wherein the elements consist of a piston (2) and a sleeve (3), which encloses the piston (2) concentrically and together herewith constitutes a first restriction area (14,15) having a selective permanent opening area ($A_1$, $A_2$, ,,, or $A_n$), **characterized in** that the first restriction area (14, 15) is positioned in series with a second restriction area comprising one or more openings (6), as e.g. axial grooves, which can be varied by screening of a membrane (17), being movable in the axial direction of the sleeve (3), the degree of screening being determined by the total difference in pressure over the valve in proportion to the difference in pressure over the first restriction area (14, 15).

7. Valve according to claim 6, **characterized in** that the first restriction area comprises three openings (14) provided in the bottom of the cup-shaped piston (2) each having their own area ($A_1$, $A_2$, $A_3$), which can be covered individually or in combination as desired by three wall parts (15) of the sleeve (3), and in that the second restriction area (3, 17) is constituted by rolling of the membrane (17) over the axial grooves (6) in the sleeve (3).

**Patentansprüche**

1. Drosselventil, insbesondere zur Steuerung eines Flüssigkeitsstroms in einem Zentralheizungs- oder einem Klimaanlagensystem, bestehend aus zwei konzentrischen Elementen (2, 3) z.B. zwei kreisförmigen Scheiben, die in dicht aneinander angeordnet sind, oder zwei zylindrischen Hülsen, deren eine innerhalb der anderen ist, wobei die Elemente eine Anzahl von n Öffnungen haben und die einzeln gedreht werden können, um eine Abdeckfläche mit einer Daueröffnungsstellung zu schaffen, die optional unter mehreren Öffnungsstellungen mit unterschiedlichen Flächen ($A_1$, $A_2$ ,..., $A_n$) ist, die im gleichen Abstand entlang des Umfangs der Elemente angeordnet sind, wobei die Anzahl n der Öffnungen in einem Element gleich der Anzahl von Abdeckflächen im anderen Element ist, dadurch **gekennzeichnet,**

daß beide Elemente in Segmente gleicher Größe aufgeteilt sind,
daß jedes Segment maximal eine Öffnung aufweist,
daß die Fläche der Öffnungen in einem Element größer als die Fläche ($A_n$) der größten Öffnung im zweiten Element ist und
daß die gleichmäßige Aufteilung durch die Zahl n der Öffnungen entsprechend der folgenden Formel bestimmt wird:

$$2^n = Dx2,$$

wobei D die Anzahl der gleich großen Segmente entlang des Umfangs ist, und wobei es für jedes Segment D zwei Drehstellungen gibt.

2. Ventil nach Anspruch 1, dadurch gekennzeichnet, daß immer mindestens ein Teil eines Segments zwischen zwei Öffnungen ist.

3. Ventil nach Anspruch 1 oder 2, dadurch gekennzeichnet, daß die kleinste Öffnung die Größe der übrigen Öffnungen entsprechend einer Binärfolge mit folgender Formel bestimmt:

$$A_p = 2A_{(p-1)},$$

wobei p die Anzahl der Öffnungen in der Folge und A die Fläche der kleinsten Öffnung ist.

4. Ventil nach Anspruch 1 bis 3, wobei die Elemente aus einem Kolben (2) und einer den Kolben (2) konzentrisch umgebenden Hülse (3) bestehen und zusammen eine erste Abdeckfläche (14, 15) bilden, die eine Daueröffnungs-Fläche ($A_1$, $A_2$, ...., oder $A_n$) haben, dadurch gekennzeichnet, daß die erste Abdeckfläche (14, 15) in Folge mit einer zweiten Abdeckfläche angeordnet ist, die eine oder mehrere Öffnungen (6), beispielsweise als axiale Schlitze, aufweist, die durch Abschirmen des Kolbens (2) variabel sind, der in der axialen Richtung der Hülse (3) bewegbar ist, wobei der Abdeckgrad durch die totale Druckdifferenz über das Ventil im Verhältnis zur Druckdifferenz über die erste Abdeckfläche (14, 15) bestimmt wird.

5. Ventil nach Anspruch 4, dadurch gekennzeichnet, daß die erste Abdeckfläche drei Öffnungen (14) im Boden des tassenförmigen Kolbens (2) aufweist, die jeweils ihre eigene Fläche ($A_1$, $A_2$, $A_3$) haben, die nach Bedarf jeweils einzeln oder in Kombination von drei Zungen (15) an der Hülse (3) abgedeckt werden können, und dadurch, daß die zweite Abdeckfläche durch die Kante des Kolbens (2) in Verbindung mit den axialen Schlitzen (6) in der Hülse (3) gebildet wird.

6. Ventil nach Anspruch 1 bis 3, wobei die Elemente aus einem Kolben (2) und einer den Kolben (2) konzentrisch umgebenden Hülse (3) bestehen und zusammen eine erste Abdeckfläche (14, 15) bilden, die eine Daueröffnungs-Fläche ($A_1$, $A_2$, ...., oder $A_n$) haben, dadurch gekennzeichnet, daß die erste Abdeckfläche (14, 15) in Folge mit einer zweiten Abdeckfläche angeordnet ist, die eine oder mehrere Öffnungen (6), beispielsweise als axiale Schlitze, aufweist, die durch Abschirmen einer Membran (17) variiert werden können, die in der axialen Richtung der Hülse (3) bewegbar ist, wobei der Abdeckgrad durch die totale Druckdifferenz über das Ventil im Verhältnis zur Druckdifferenz über die erste Abdeckfläche (14, 15) bestimmt wird.

7. Ventil nach Anspruch 6, dadurch gekennzeichnet, daß die erste Abdeckfläche drei Öffnungen (14) im Boden des tassenförmigen Kolbens (2) aufweist, die jeweils ihre eigene Fläche ($A_1$, $A_2$, $A_3$) haben, die nach Bedarf jeweils einzeln oder in Kombination von drei Wandteilen (15) der Hülse (3) abgedeckt werden können, und dadurch,

daß die zweite Abdeckfläche (3, 17) durch Abrollen der Membran (17) über die axialen Schlitze (6) in der Hülse (3) gebildet wird.

**Revendications**

1. Valve à étranglement, spécialement pour la commande du débit de liquide dans un système de chauffage central ou de climatisation, constituée de deux éléments concentriques (2, 3), par exemple deux plaques circulaires disposées en contact étroit l'une avec l'autre, ou deux manchons cylindriques, l'un étant à l'intérieur de l'autre, lesdits éléments ayant un nombre n de trous et étant conçus pour tourner individuellement afin de créer une zone de restriction avec une position ouverte permanente, qui est optionnelle parmi plusieurs positions ouvertes ayant des zones de surfaces différentes ($A_1$, $A_2$, ..., $A_n$), et qui est localisée de façon équidistante le long de la circonférence des éléments, le nombre n de trous dans un élément étant égal au nombre de zones de couverture du deuxième élément, **caractérisée en ce que** :

   - les deux éléments sont divisés en segments de taille égale,
   - chaque segment possède au maximum un trou,
   - la surface des trous dans un élément est plus grande que la surface ($A_n$) du trou le plus grand dans le deuxième élément, et
   - la division en distances égales est déterminée par le nombre n de trous suivant la formule :

$$2^n = D \times 2,$$

   - dans laquelle D est le nombre de segments de grandeur égale le long de la circonférence, et pour laquelle il existe deux positions de rotation pour chaque segment D.

2. Valve selon la revendication 1, **caractérisée en ce qu'**il existe à tout instant au moins une partie d'un segment entre deux trous.

3. Valve selon la revendication 1 ou 2, **caractérisée en ce que** le trou le plus petit détermine la taille des trous restants suivant une série binaire obéissant à l'équation :

$$A_p = 2A_{(p-1)},$$

dans laquelle p est le numéro du trou dans la série et A est la surface du trou le plus petit.

4. Valve selon les revendications 1 à 3, dans laquelle les éléments sont constitués d'un piston (2) et d'un manchon (3), qui entoure le piston (2) de façon concentrique et constitue ainsi avec lui une première zone de restriction (14, 15) ayant une surface d'ouverture permanente sélective ($A_1$, $A_2$, ... ou $A_n$), **caractérisée en ce que** la première zone de restriction (14, 15) est positionnée en série avec une deuxième zone de restriction comportant une ou plusieurs ouvertures (6), comme par exemple des gorges axiales, qui sont rendues variables par l'effet d'écran du piston (2) mobile dans la direction axiale du manchon (3), le degré de l'effet d'écran étant déterminé par la différence totale de pression au niveau de la valve en proportion avec la différence de pression au niveau de la première zone de restriction (14, 15).

5. Valve selon la revendication 4, **caractérisée en ce que** la première zone de restriction comporte trois ouvertures (14) ménagées dans le fond du piston (2) en forme de coupe, chacune ayant sa propre surface ($A_1$, $A_2$, $A_3$), qui peut être couverte individuellement ou en combinaison à volonté par trois languettes (15) sur le manchon (3), et en ce que la deuxième zone de restriction est constituée par le bord du piston (2) en conjonction avec les gorges axiales (6) du manchon (3).

6. Valve selon les revendications 1 à 3, dans laquelle les éléments sont constitués par un piston (2) et un manchon (3), qui entoure le piston (2) de façon concentrique et forme ainsi avec lui une première zone de restriction (14, 15) ayant une surface d'ouverture permanente sélective ($A_1$, $A_2$... ou $A_n$), **caractérisée en ce que** la première zone de restriction (14, 15) est positionnée en série avec une deuxième zone de restriction comportant une ou plusieurs ouvertures (6), comme par exemple des gorges axiales, qui peuvent être modifiées par effet d'écran d'une membrane (17), mobile dans la direction axiale du manchon (3), le degré de l'effet d'écran étant déterminé par la différence totale de pression au niveau de la valve en proportion avec la différence de pression au niveau de la première zone de restriction (14, 15).

7. Valve selon la revendication 6, **caractérisée en ce que** la première zone de restriction comporte trois ouvertures (14) ménagées dans le fond du piston (2) en forme de coupe, chacune ayant sa propre surface ($A_1$, $A_2$, $A_3$), qui peut être couverte individuellement ou en combinaison à volonté par trois parties de paroi (15) du manchon (3), et en ce que la deuxième zone de restriction (3, 17) est constituée en faisant porter la membrane (17) sur les gorges axiales (6) du manchon (3).

*Fig. 1*

| Turning position | Restriction area | | | Result |
|---|---|---|---|---|
| | A1 | A2 | A3 | |
| 1 | 0 | 0 | 0 | 0 |
| 2 | 1 | 0 | 0 | A1 |
| 3 | 0 | 1 | 0 | A2 |
| 4 | 0 | 0 | 1 | A3 |
| 5 | 1 | 1 | 0 | A1 + A2 |
| 6 | 1 | 0 | 1 | A1 + A3 |
| 7 | 0 | 1 | 1 | A2 + A3 |
| 8 | 1 | 1 | 1 | A1 + A2 + A3 |

*Fig. 2*

Fig. 3

Fig. 4

Fig. 5

Fig. 6

Fig. 7

Fig. 8

Fig. 9

Fig. 10

Fig. 11

Fig. 12